# EUROPÄISCHE PATENTANMELDUNG

(11) **EP 2 020 376 A2**
(43) Veröffentlichungstag der Anmeldung: **04.02.2009**
(21) Anmeldenummer: 08011975.3
(22) Anmeldetag: 03.07.2008
(51) Int. Cl.: B63B 3/70, B63B 25/00

(54) **ISO-Palettierung für ein Geschütz**

(30) Priorität: 01.08.2007 DE 102007036458
(71) Anmelder: OERLIKON CONTRAVES AG, 8050 Zürich (CH)
(72) Erfinder: Trigo, Marcos, 6312 Steinhausen (CH); Gerber, Michael, 8050 Zürich (CH)
(74) Vertreter: Dietrich, Barbara

(57) **Zusammenfassung**

Vorgeschlagen wird, eine Unterlafette zu nutzen, die normiert auf einem Schiff oder einem festen Bodenfundament montiert werden kann, so dass ein Geschütz (1) mit minimalem Aufwand schnell, reproduzierbar und rutschfest montiert und später wieder demontiert werden kann. Diese normierte Unterlafette wird mittels so genannter normierter ISO- Ecken (2), die auf speziell dafür vorgesehene Supports (3.1- 3.4) fixierbar sind, sowie einen die Montage unterstützenden Montagerahmen (10) geometrisch korrekt an ein Fundament oder Schiff montiert. Erreicht werden dadurch eine steife Lagerung und spielfreie Fixierung des Geschützes (1).

## Beschreibung

Bei der Integration von Geschützen auf Schiffen oder fixen Landstellungen ergeben sich vielfache Probleme bezüglich Montageaufwand und geometrischer Reproduzierbarkeit der Aufstellung. Insbesondere auf Schiffen sind, bedingt durch notwendige Deckanbindungen, die Aufstellorte für die Geschütze zwar vorgegeben, jedoch das Integrieren auf das Deck sehr aufwändig. Bei größeren Geschützen sind zudem Deckdurchbrüche notwendig.

Die DE 102 54 786 A1 offenbart beispielsweise die Integration eines großkalibrigen Geschützes auf einem Schiff. Der Turm eines Landgeschützes wird dabei mittels einer Adapterplatte und einer stoßdämpfenden Lagerung auf dem Schiff installiert. Durch die Modulbauweise wird erreicht, dass auf dem Schiff keine nennenswerten Änderungen vorzunehmen sind.

Hier stellt sich die Erfindung die Aufgabe, eine einfache und schnelle Anbindung für ein Schiffs- oder Landgeschütz auf einem Schiffs- oder Bodenfundament zu ermöglichen.

Gelöst wird die Aufgabe durch die Merkmale des Patentanspruchs 1. Vorteilhafte Ausführungen sind in den Unteransprüchen aufgeführt.

Der Erfindung liegt die Idee zugrunde, eine Unterlafette zu nutzen, die normiert auf dem Schiff oder einem festen Bodenfundament montiert wird, so dass das Geschütz mit minimalem Aufwand schnell, reproduzierbar und rutschfest montiert und später wieder demontiert werden kann.

Zurückgegriffen wird bei dieser Idee auf die bereits bei der Anmelderin eigenen Skyshield 35 mm Revolver Gun eingeführte ISO- Normierung der Unterlafette (ISO = Internationale Organisation für Normung).

Diese normierte Unterlafette wird nunmehr mittels neuer, so genannter normierter ISO-Ecken, die auf speziell dafür vorgesehene Supports fixierbar sind, sowie einen die Montage unterstützenden Montagerahmen geometrisch korrekt an ein Fundament oder Schiff montiert. Erreicht werden dadurch eine steife Lagerung und spielfreie Fixierung des Geschützes. Die modulare Lösung wirkt in Zug- und Druckrichtung (bei Funktion der Waffe). Es handelt sich dabei um eine rein mechanische Anbindung, so dass diese wartungsfrei wird. In Funktion der Waffe ist eine Reduktion der Waffenstreuung zu erwarten. Ein weiterer Vorteil ist zudem darin zu sehen, dass für Geschütze nunmehr eine international genormte Schnittstelle für das Land und zur See geschaffen wird.

Anhand eines Ausführungsbeispiels mit Zeichnung soll die Erfindung näher erläutert werden. Es zeigt
- Fig. 1: ein ISO- paletiertes Geschütz,
- Fig. 2 a-d: individuell ausgestaltete Supporte,
- Fig. 3: eine vergrößerte Darstellung aus Fig. 2a,
- Fig. 4: einen Montagerahmen.

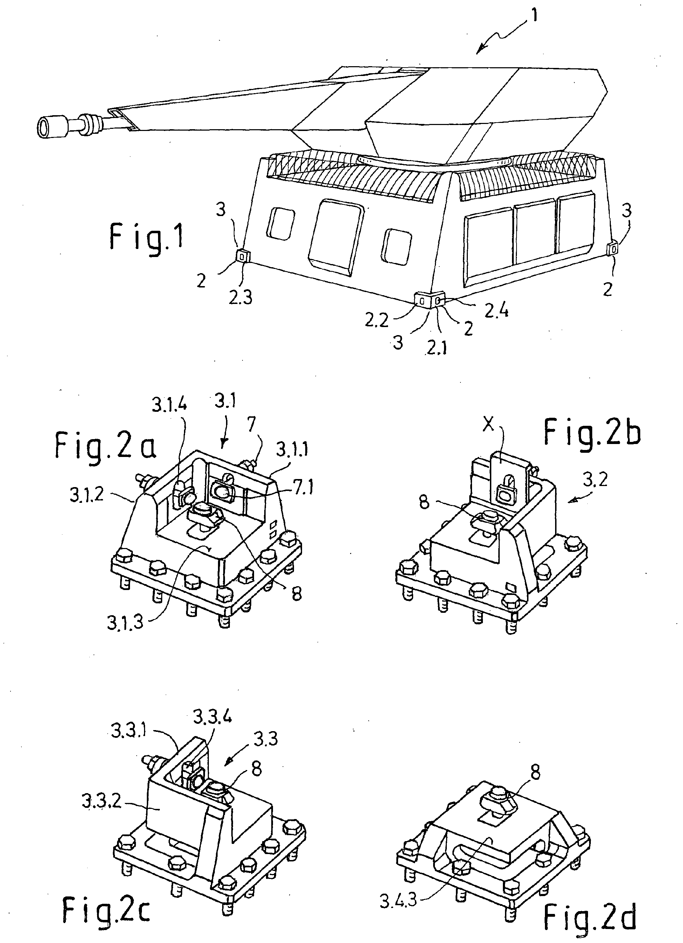

Wie in Fig. 1 dargstellt, wird ein ISO- palettiertes Geschütz 1 an den ISO- Ecken 2 der Unterlafette an je einen Support 3 fixiert. Die ISO- Ecken 2 weisen an den, die Ecke umschließenden Seitenflächen 2.1, 2.1 sowie 2.3 Langlöcher 2.4 auf.

Um eine statisch bestimmte Lagerung zu realisieren, benötigt jede ISO- Ecke 2 einen geometrisch individuell ausgestalteten Support 3.1 -3.4 (Fig. 2a-d).

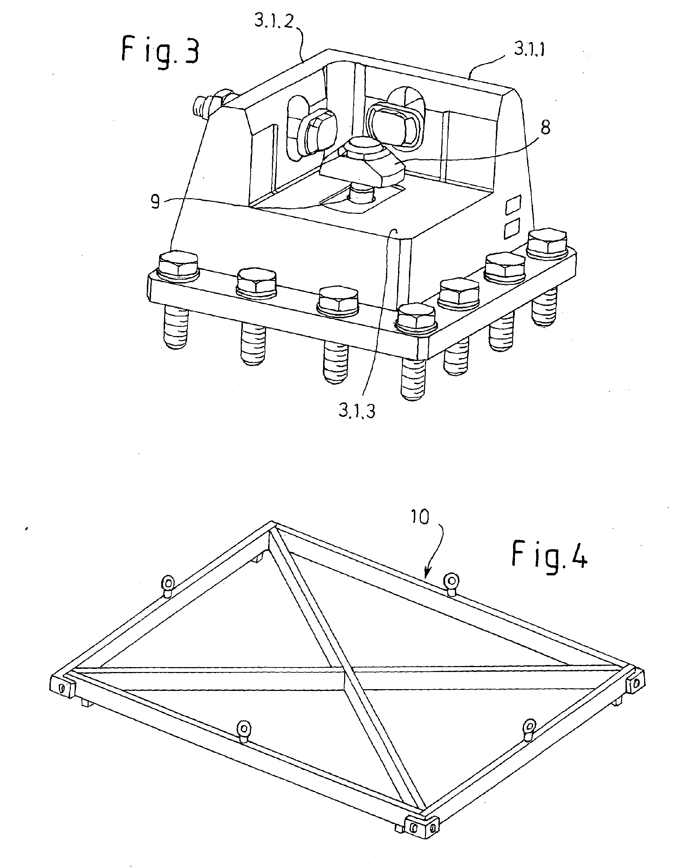

Der Support 3.1 (Fig. 2a) wird durch zwei seitliche Flächen 3.1.1, 3.1.2 sowie einer Grundfläche 3.1.3 gebildet. In den beiden seitlichen Flächen 3.1.1 und 3.1.2 ist jeweils ein dem Langloch 2.4 der ISO- Ecken 2 äquivalentes Langloch 3.1.4 eingebunden. Diese Langlöcher 2.4 und 3.1.4 korrespondieren bei der Montage / Fixierung der ISO- Ecken 2 an den Support 3. Durch die seitlichen Langlöcher 3.1.4 sind Schraubverbindungen 7 mit den Langlöchern 2.4, 3.1.4 angepassten Köpfen 7.1. geführt, die sich hinter die Seitenflächen 2.1, 2.2 der ISO-Ecken 2 hinterdrehen können (siehe Fig. 2c). In dieser Grundfläche 3.1.3 ist eine weitere Schraubverbindung 8 eingebunden, die so ausgestaltet ist, dass sie in die genormten Öffnungen der ISO- Ecken 2 passt und mit einem Mutterteil 9 von innen die ISO- Ecken 2 an den jeweiligen Support 3 zwingen (Fig.3).

Der Support 3.3 nach Fig. 2c unterscheidet sich von den anderen dadurch, dass nur eine der beiden seitlichen Flächen 3.3.1, 3.3.2 ein dem Langloch 2.4 der ISO- Ecken 2 äquivalentes Langloch 3.3.4 besitzt.

Der Support 3.2 nach Fig. 2b unterscheidet sich von den anderen dadurch, dass nur eine der beiden seitlichen Flächen 3.3.1, 3.3.2 ein dem Langloch 2.4 der ISO- Ecken 2 äquivalentes Langloch 3.3.4 besitzt, um mit dem Support 3.1 und 3.2 eine statisch bestimmte Lagerung zu erreichen, wird das Spiel an der seitlichen Fläche des Supports 3.2 mit einem Keil X eingestellt.

Der Support nach Fig. 2d besitzt hingegen nur eine Grundfläche 3.4.3 mit der Schraubverbindung 8 und dem Mutterteil 9 (siehe auch Fig. 3).

Jede ISO- Ecke 2 wird mittels der Schraubverbindung 8 in einer oder je nach Lagerungstyp mehreren Raumrichtungen formschlüssig fixiert.

Fig. 4 zeigt einen die Montage unterstützenden Montagerahmen 10, um die Aufnahmen geometrisch korrekt an ein Fundament oder auf ein Schiff zu montierten.

## Patentansprüche

1. ISO- palettiertes Geschütz (1) mit genormten Ecken (2) an einer Unterlafette, wobei die Ecken (2) über Supports (3.1 - 3.4) auf dem Schiff oder einem festen Bodenfundament montiert werden.

2. Geschütz nach Anspruch 1, **dadurch gekennzeichnet, dass** die Ecken (2) durch die Supports (3.1 -3.4) in einer oder je nach Lagerungstyp mehreren Raumrichtungen formschlüssig fixiert werden.

3. Geschütz nach Anspruch 1 oder 2, **dadurch gekennzeichnet, dass** jeder Support (3.1 -3.4) zumindest eine Grundfläche (3.1.3, 3.2.3, 3.3.3, 3.4.3) mit einer Schraubverbindung (8) und einem Mutterteil (9) aufweist.

4. Geschütz nach einem der Ansprüche 1 bis 3, **dadurch gekennzeichnet, dass** ein Support (3.1 - 3.3) zusätzlich zwei seitliche Flächen (3.1.1, 3.1.2 - 3.3.1, 3.3.2) aufweisen kann, in denen jeweils ein Langloch (3.1.4 -3.3.4) eingebunden sein kann.

5. Geschütz nach Anspruch 4, **dadurch gekennzeichnet, dass** das Langloch (3.1.4 - 3.3.4) des Supports (3.1 -3.3) einem Langloch (2.4) der Seitenflächen (2.1, 2.2) der ISO- Ecken (2) adäquat ist, so dass diese Langlöcher (2.4 und 3.1.4 -3.3.4) bei der Montage / Fixierung der ISO- Ecken (2) an den Support (3) miteinander korrespondieren.

6. Geschütz nach Anspruch 4 oder 5, **dadurch gekennzeichnet, dass** durch die seitlichen Langlöcher (3.1.4 -3-3-4) Schraubverbindungen (7) mit an die Langlöcher (2.4) der Ecken (2) und den Supports (3.1.4-3.3.4) angepassten Köpfen (7.1.) geführt sind, die sich hinter die Seitenflächen (2.1, 2.2) der ISO- Ecken (2) hinterdrehen können.
